(19) **Europäisches Patentamt / European Patent Office / Office européen des brevets**

(11) **EP 3 491 577 B1**

(12) **FASCICULE DE BREVET EUROPEEN**

(45) Date de publication et mention de la délivrance du brevet:
**25.08.2021 Bulletin 2021/34**

(21) Numéro de dépôt: **17757796.2**

(22) Date de dépôt: **27.07.2017**

(51) Int Cl.:
***G06K 7/10*** *(2006.01)*

(86) Numéro de dépôt international:
**PCT/FR2017/052107**

(87) Numéro de publication internationale:
**WO 2018/024967 (08.02.2018 Gazette 2018/06)**

(54) **PROCÉDÉ ET SYSTÈME DE DÉTECTION D'UNE POSITION RELATIVE SPÉCIFIQUE ENTRE DEUX OBJETS**

VERFAHREN UND SYSTEM ZUM ERFASSEN EINER SPEZIFISCHEN RELATIVEN POSITION ZWISCHEN ZWEI OBJEKTEN

METHOD AND SYSTEM FOR DETECTING A SPECIFIC RELATIVE POSITION BETWEEN TWO OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2016 FR 1657482**

(43) Date de publication de la demande:
**05.06.2019 Bulletin 2019/23**

(73) Titulaire: **Commissariat à l'Énergie Atomique et aux Énergies Alternatives 75015 Paris (FR)**

(72) Inventeurs:
• **THOMAS, Thierry**
  **38760 Varces Allieres et Risset (FR)**
• **REVERDY, Jacques**
  **38920 Crolles (FR)**

(74) Mandataire: **Guérin, Jean-Philippe Innovation Competence Group 310 avenue Berthelot 69372 Lyon Cedex 08 (FR)**

(56) Documents cités:
EP-A1- 1 043 679      EP-A1- 2 077 518
WO-A1-99/21144      JP-A- 2003 148 653
US-A1- 2007 290 846

**Description**

L'invention concerne la localisation d'objets au moyen d'étiquettes et d'antennes radiofréquence, et en particulier la localisation de la position relative d'objets avec un maximum de précision.

Le document FR2891980 décrit un procédé de localisation d'un lecteur RFID communiquant avec une étiquette RFID. Ce procédé permet de localiser le lecteur RFID en faisant appel à une triangulation au moyen de plusieurs stations de base. En calculant la distance entre le lecteur RFID et les différentes stations de base, une localisation approximative du lecteur RFID est obtenue.

La localisation du lecteur RFID n'est qu'approximative. Par conséquent, en déduire la localisation d'une étiquette RFID positionnée à proximité est encore plus approximatif. Une telle localisation s'avère en outre complexe à mettre en œuvre.

Le document US20080278289 décrit un dispositif de localisation d'étiquette RFID par des balises de génération d'un champ magnétique. L'étiquette RFID mesure le niveau des champs magnétiques produits par ces balises, positionnées en des emplacements connus. L'estimation de la position de l'étiquette est effectuée par triangulation entre les champs magnétiques mesurés pour différentes balises, par des moyens de calculs internes à l'étiquette ou bien au niveau d'un lecteur RFID.

La localisation de l'étiquette est relativement approximative. Sa localisation nécessite en outre un maillage avec un grand nombre de balises et la mesure d'un champ électromagnétique sur une bande de fréquence différente de la bande de communication avec le lecteur.

L'invention vise à résoudre un ou plusieurs de ces inconvénients.

EP1043679 décrit un système de détection d'une distance ou d'une position relative entre un lecteur radiofréquence et un récepteur radiofréquence, comprenant :

- un récepteur radiofréquence de type sans contact inductif comprenant un bobinage d'antenne et un circuit configuré pour moduler sélectivement la charge électrique aux bornes dudit bobinage d'antenne ;

- un lecteur radiofréquence sans contact de type inductif comprenant :

- un circuit d'antenne d'émission/réception avec une mutuelle inductance non nulle avec ledit bobinage d'antenne du récepteur radiofréquence pour une distance relative nulle ;

- un circuit de communication, comprenant une chaîne d'émission radiofréquence et une chaîne de réception radiofréquence connectées au circuit d'antenne d'émission/réception ;

- un circuit de traitement connecté audit circuit d'antenne d'émission/réception, et configuré pour identifier la présence d'un récepteur en détectant une mutuelle inductance non nulle entre le circuit d'antenne d'émission/réception et un bobinage d'antenne.

WO99/21144 porte sur un dispositif de détection d'étiquettes RFID sur un trajet de convoyage. Ce document propose une répartition de transpondeurs le long d'un trajet. Ce document porte sur l'utilisation d'un lecteur présentant une antenne allongée selon une direction perpendiculaire à la direction de convoyage.

JP2003148653 porte sur un principe de fixation de multiples étiquettes RFID à différents emplacements d'un tuyau ou câble allongé et enterré. A partir des identifiants des étiquettes, la géométrie de l'élément enterré est retracée par des mesures/détections ultérieures avec un lecteur.

EP2077518 décrit des principes de détermination de la distance entre un lecteur et un récepteur sur la base de l'accroissement de l'inductance mutuelle de leurs antennes lorsqu'on les rapproche.

US2007/0290846 D5 décrit un principe de détermination de la distance et de l'orientation entre un lecteur et un récepteur, en fonction du couplage inductif entre leurs antennes. Le document propose aussi de moduler la puissance d'émission.

L'invention porte ainsi sur un système de détection d'une position relative spécifique entre un lecteur radiofréquence et un récepteur radiofréquence, tel que défini dans la revendication 1.

L'invention porte également sur les variantes définies dans les revendications dépendantes. L'homme du métier comprendra que chacune des caractéristiques des variantes des revendications dépendantes peut être combinée indépendamment aux caractéristiques de la revendication indépendante, sans pour autant constituer une généralisation intermédiaire. L'invention porte en outre sur un procédé de détection d'une position relative spécifique entre un lecteur radiofréquence et une étiquette radiofréquence, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :

- la figure 1 illustre un premier exemple schématique d'un circuit de lecteur radiofréquence ;
- la figure 2 est un exemple plus détaillé d'un exemple de circuit d'alimentation haute fréquence ;
- la figure 3 illustre de façon schématique un circuit de traitement du lecteur radiofréquence de la figure 1 ;
- la figure 4 est un premier exemple schématique d'une étiquette radiofréquence ;
- la figure 5 est une vue en perspective d'un exemple de mise en œuvre d'un système de détection selon l'invention pour déterminer la position d'une corde ;

- la figure 6 est une vue de dessus d'un exemple de circuit d'antenne d'émission/réception du lecteur ;
- la figure 7 est une vue de dessus d'un exemple de circuit d'antenne de réception du lecteur ;
- la figure 8 est une vue en perspective d'un exemple de bobinage d'antenne de réception de l'étiquette ;
- la figure 9 est une vue en perspective des circuits d'antenne et du bobinage d'antenne pour une position relative spécifique ;
- la figure 10 est un diagramme illustrant les couplages inductifs des antennes du lecteur par rapport à l'antenne de l'étiquette, en fonction de leurs positions relatives ;
- la figure 11 est une vue en perspective de circuits d'antenne et d'un bobinage d'antenne d'une variante ;
- la figure 12 est un diagramme illustrant les couplages inductifs des antennes du lecteur par rapport à l'antenne de l'étiquette de la variante de la figure 11, en fonction de leurs positions relatives ;
- la figure 13 est une vue en perspective de circuits d'antenne et d'un bobinage d'antenne d'une variante ;
- la figure 14 est un diagramme illustrant les couplages inductifs des antennes du lecteur par rapport à l'antenne de l'étiquette de la variante de la figure 13, en fonction de leurs positions relatives ;
- la figure 15 est une vue en projection de circuits d'antenne d'une variante ;
- la figure 16 illustre des diagrammes des couplages inductifs des antennes du lecteur par rapport à l'antenne de l'étiquette, en fonction d'un angle d'incidence.

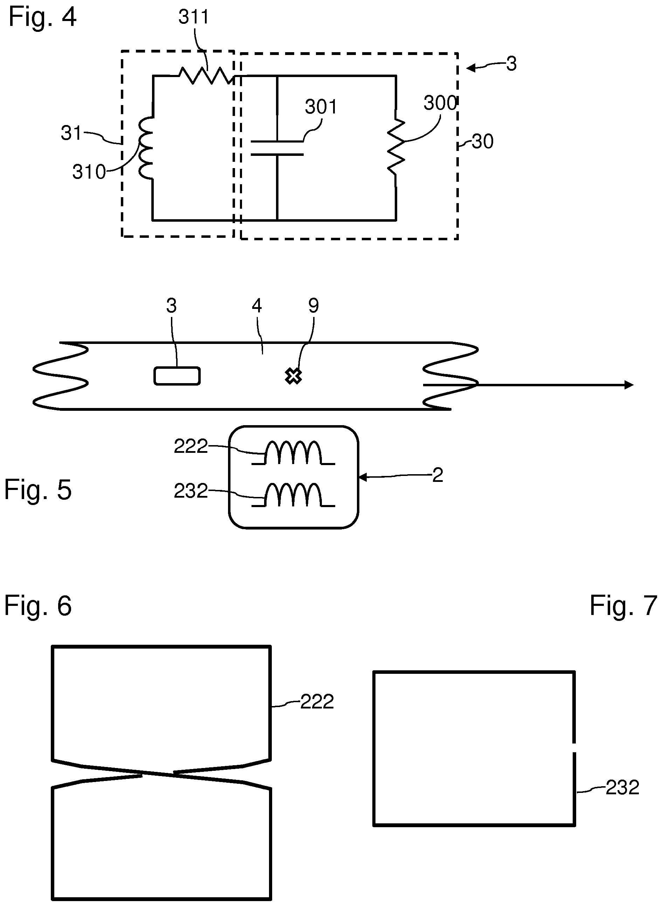

L'invention porte sur un système de détection d'une position relative entre deux objets, basé sur un dispositif de communication radiofréquence sans fil de type inductif. Un exemple de système de détection 1 est illustré de façon schématique à la figure 4, et davantage détaillé ultérieurement. Le dispositif de communication d'un tel système de détection 1 comprend une station de base ou lecteur radiofréquence 2, et un récepteur autonome 3 généralement désigné par le terme d'étiquette ou carte sans contact, fonctionnant en récepteur et alimenté à distance. Dans un tel dispositif de communication radiofréquence, on établit un lien par champ magnétique radiofréquence entre le lecteur 2 et le récepteur 3. Ce champ magnétique est en régime quasi stationnaire. Les organes de couplage du lecteur 2 et du récepteur 3 incluent des boucles, enroulements ou bobines formant des circuits d'antenne respectifs, prévus pour un couplage inductif. Des composants électroniques sont associés à chaque circuit d'antenne avec pour fonction de réaliser un accord en fréquence, un amortissement ou une adaptation d'impédance. L'association du circuit d'antenne et des composants électroniques est usuellement désignée par le terme d'antenne.

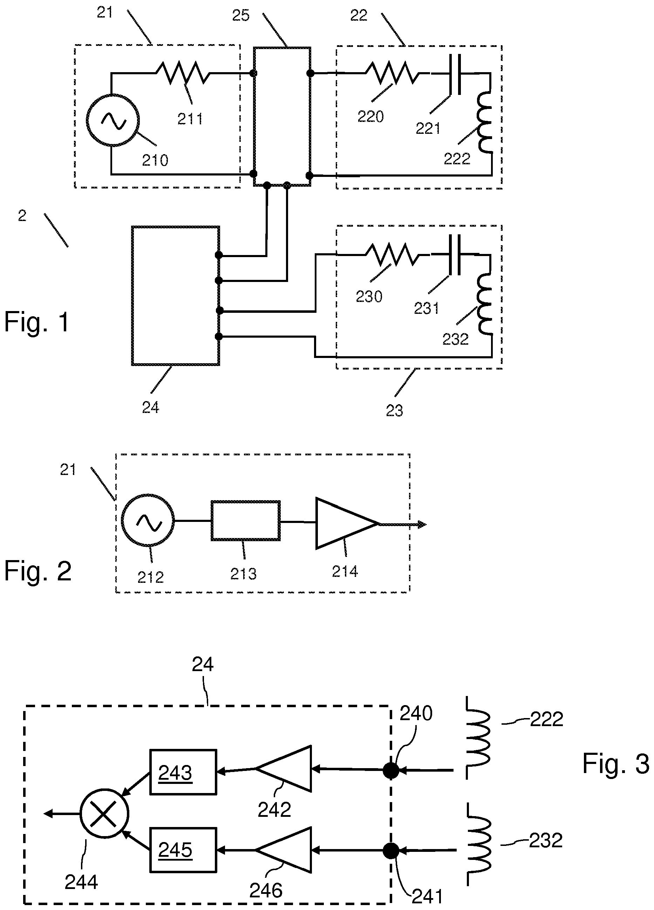

La figure 1 illustre de façon schématique un exemple d'un lecteur radiofréquence 2 pour un système de détection 1 selon l'invention. Le lecteur 2 comporte un circuit d'alimentation en signal haute fréquence 21, une antenne 22 d'émission/réception, une antenne de réception 23, un circuit de traitement 24, et un coupleur 25 (dans cet exemple). Le circuit d'alimentation 21 est modélisé par un générateur 210 connecté en série avec une résistance 211. Plus précisément, le circuit d'alimentation 21 peut être constitué d'une source de signal 212, d'un modulateur 213, suivi d'un amplificateur de puissance 214 (incluant la résistance 211), comme illustré à la figure 2. L'antenne d'émission/réception 22 est modélisée par un circuit résonnant RLC connecté au circuit d'alimentation 21 par l'intermédiaire du coupleur 25. L'antenne de réception 23 est modélisée par un circuit résonnant RLC connecté au circuit de traitement 24. Le signal d'entrée du circuit de traitement 24 pour l'antenne 22 est fourni par le coupleur 25. Le coupleur 25 peut par exemple être une simple connexion en dérivation, un coupleur directif, ou une sonde de courant. Un exemple de circuit de traitement 24 sera décrit de façon plus détaillée en référence à la figure 3.

L'antenne d'émission/réception 22 peut être modélisée par une résistance 220, une capacité 221 et une inductance 222 connectées en série. L'inductance 222 modélise les bobinages ou enroulements d'un circuit d'antenne. Le circuit d'antenne de l'antenne de réception 22 sera donc par la suite désigné par cette même référence 222. Le circuit d'alimentation 21 est configuré de façon connue en soi pour alimenter l'antenne d'émission/réception 22 de façon à produire un champ électromagnétique radiofréquence de façon intentionnelle. Le lecteur 2 comprend à cet effet un circuit de communication incluant une chaîne d'émission radiofréquence, de façon connue en soi.

Le circuit de traitement 24 est connecté aux bornes des antennes 22 et 23 pour traiter les signaux électriques aux bornes de ces antennes 22 et 23. Suivant une variante, un port 240 du circuit de traitement 24 est connecté au coupleur 25. Un port 241 du circuit de traitement 24 est connecté à l"antenne 23. Une ou deux chaînes de réception radiofréquence du circuit de communication sont par exemple incluses dans ce circuit de traitement 24.

L'antenne de réception 23 peut être modélisée par une résistance 230, une capacité 231 et une inductance 232 connectées en série. L'inductance 232 modélise les bobinages ou enroulements d'un circuit d'antenne. Le circuit d'antenne de l'antenne de réception 23 sera donc par la suite désigné par cette même référence 232. Le circuit de communication comprend une chaîne de réception radiofréquence non détaillée, connectée à l'antenne de réception 23.

La figure 4 illustre de façon schématique un exemple d'un récepteur étiquette radiofréquence 3 pour un système de détection 1 selon l'invention. Le récepteur 3 est usuellement modélisé par un circuit RLC parallèle, tel qu'illustré à la figure 3. Le récepteur 3 est modélisé par une antenne 31, connectée à une puce 30. L'antenne 31 est modélisée par une inductance 310 connectée en série avec une résistance 311. L'inductance 310 modélise les bobinages ou enroulements d'un circuit d'antenne. Le circuit d'antenne de l'antenne 31 sera par la suite désigné par cette même référence 310. La puce 30 est ici modélisée par une capacité 301 et une résistance 300 connectées en parallèle. La résistance 300 modélise généralement les circuits internes de la puce 30, la capacité 301 modélisant un condensateur d'accord en fréquence. La fréquence de résonance du circuit formé par le récepteur 3 est généralement très proche de la fréquence de travail. Une puce telle que celle commercialisée par la société NXP sous la référence SL2S2002FTB: ICODE SLIX peut par exemple être utilisée.

Le couplage inductif entre lecteur 2 et le récepteur 3 permet un transfert d'énergie du lecteur 2 vers le récepteur 3 par inductance mutuelle. Le champ magnétique produit en émission par le circuit d'antenne 222 du lecteur 2 au niveau du circuit d'antenne 310 du récepteur 3 positionné à proximité, induit une force électromotrice fem au sein de ce circuit d'antenne 310 : fem = $\mu 0$ * H *S *$\omega$. La tension Ve aux bornes de la puce 30 est plus élevée que cette valeur fem, le gain en tension (coefficient de surtension) étant pratiquement égal au facteur de qualité du résonateur (facteur de qualité Q ≈ (Le* w /R + re/(Le* $\omega$))$^{-1}$, avec Le la valeur de l'inductance 310, R la valeur de la résistance 300, re la valeur de la résistance 311, avec Le*Ce* $\omega e^2$=1, Ce la valeur de la capacité 301 et we la pulsation de résonance du récepteur 3) lorsque l'accord de résonance correspond à la fréquence f0 de travail (w = $\omega$0, $\omega$0 = 2$\pi$*f0). La tension Ve est redressée et sert généralement à alimenter les circuits électriques et électroniques du récepteur 3.

D'autre part, pour communiquer avec le lecteur 2, le récepteur 3 recourt à la technique de modulation de charge, en modifiant un de ses paramètres électriques, Le, Ce ou R. Dans la solution la plus fréquemment utilisée, un récepteur 3 module la valeur R. La modulation de charge provoque une modulation du régime de courant dans le circuit d'antenne 310 lorsque celui-ci est soumis au champ électromagnétique primaire produit par le lecteur 2. Ce courant dans le circuit d'antenne 310 correspond au champ électromagnétique secondaire produit en réaction par le récepteur 3.

Le lecteur 2 comporte ainsi un circuit d'antenne d'émission/réception 222 et un circuit d'antenne de réception 232. Les circuits d'antenne 222 et 232 sont fixés l'un par rapport à l'autre, en étant par exemple fixés sur un même support. Les circuits d'antenne 222 et 232 présentent avantageusement une configuration géométrique de mutuelle inductance la plus faible possible, de préférence sensiblement nulle. Ainsi, le signal induit par le champ électromagnétique produit par le circuit d'antenne 222 dans le circuit d'antenne 232, perturbe au minimum le circuit de traitement 24.

Le concept de circuits conducteurs en mutuelle inductance nulle, est connu et utilisé pour différentes applications. Les géométries décrites en mutuelle inductance nulle sont définies au cas par cas. Un procédé connu pour concevoir des circuits en mutuelle inductance nulle est basé sur l'utilisation des mutuelles inductances partielles. Ce procédé permet avantageusement de dissocier différentes parties des deux circuits conducteurs sous forme de tronçons et d'établir une mutuelle inductance partielle entre deux tronçons. Il est ainsi possible de définir des règles de base pour obtenir une mutuelle inductance à la valeur désirée (par exemple la valeur nulle).

Ce procédé exploite la formule de Neumann donnant la mutuelle inductance M12 entre deux circuits C1 et C2 :

$$M_{12} = \frac{\mu_0}{4\pi} \cdot \oint_{C_1} \oint_{C_2} \frac{d\vec{\ell}_1 \cdot d\vec{\ell}_2}{d}$$

Cette formule recourt à une double intégrale curviligne, qui peut être décomposée en mutuelles inductances partielles par une décomposition en tronçons des deux circuits C1 et C2. Les deux circuits sont dotés d'un sens de parcours, ces sens sont pris par convention. Ces sens de parcours impliquent un signe à la mutuelle inductance, ainsi qu'aux mutuelles inductances partielles découlant d'une décomposition des circuits C1 et C2.

Cette formule permet également de dériver des règles de base applicables à deux tronçons rectilignes. Le terme sous l'intégrale double montre que si les tronçons sont perpendiculaires, leur mutuelle inductance est nulle, et si les tronçons sont parallèles, leur mutuelle inductance est inversement proportionnelle à la distance qui sépare les deux tronçons. La mutuelle inductance est positive si le sens est le même dans les deux tronçons et négative si les sens sont opposés.

L'invention vise à détecter avec précision une position relative spécifique entre le lecteur 2 et le récepteur 3. À cet effet, on prévoit que pour cette position relative spécifique :

- le circuit d'antenne d'émission/réception 222 présente une mutuelle inductance non nulle avec le circuit d'antenne 310. Ainsi, dans cette position relative spécifique, le lecteur 2 peut à la fois alimenter le récepteur 3, et identifier une proximité avec le récepteur 3 du fait de la modulation de charge sur le circuit d'antenne 310, détectable par le circuit de traitement 24 depuis le signal fourni sur son port d'entrée 240 et issu du circuit d'antenne 222 ;
- la mutuelle inductance entre le circuit d'antenne 310 et le circuit d'antenne de réception 232 présente un minimum. On peut ainsi discriminer cette position relative spécifique par rapport à d'autres positions relatives pour lesquelles la mutuelle inductance entre le circuit d'antenne 310 et le circuit d'antenne 232 est supérieure. De manière avantageuse, ce minimum est une valeur nulle, correspondant à un passage à zéro avec changement de signe de la mutuelle inductance.

Le circuit de traitement 24 est ainsi configuré pour discriminer les configurations suivantes, en fonction des mutuelles inductances atteintes pour les circuits d'antenne 222 et 232 avec le circuit d'antenne 310 :

- le lecteur 2 identifie une absence de proximité du circuit d'antenne 310. Quelle que soit la mutuelle inductance entre le circuit d'antenne de réception 232 et le circuit d'antenne 310, le lecteur 2 identifie que le récepteur 3 n'est pas à proximité et n'est pas dans ladite position relative spécifique ;
- le lecteur 2 identifie une proximité du circuit d'antenne 310, et l'absence d'un minimum de la mutuelle inductance entre le circuit d'antenne 232 et le circuit d'antenne 310. Le lecteur 2 identifie alors que le récepteur 3 est à proximité mais n'est pas dans ladite position relative spécifique ;
- le lecteur 2 identifie une proximité du circuit d'antenne 310, et un minimum de la mutuelle inductance entre le circuit d'antenne 232 et le circuit d'antenne 310.

Le lecteur 2 identifie alors que le récepteur 3 est à proximité et est dans ladite position relative spécifique. Cette position relative spécifique peut-être déterminée avec précision, le minimum de la mutuelle inductance entre le circuit d'antenne 232 et le circuit d'antenne 310 n'étant obtenu que pour cette position relative spécifique.

La figure 6 est une vue de face d'un exemple de circuit d'antenne 222 du lecteur radiofréquence 2. Le circuit d'antenne 222 comprend une piste conductrice filaire (ici illustrée en projection dans un plan). La piste conductrice (ici en cuivre) est en pratique ménagée sur une paroi cylindrique de section circulaire. Pour les simulations réalisées, le circuit d'antenne 222 choisi présente une longueur de 100 mm, une largeur de 100 mm, un rayon du cylindre de 51 mm et un diamètre de fil de 1 mm. Le circuit d'antenne 222 présente ici une inductance de 513nH. La piste conductrice filaire du circuit d'antenne 222 comporte globalement deux boucles rectangulaires connectées en série et en sens opposés pour présenter une forme sensiblement en 8. Pour les simulations réalisées, l'antenne 22 a été configurée pour communiquer à une fréquence de 13,56MHz.

La figure 7 est une vue de face d'un exemple de circuit d'antenne 232 du lecteur radiofréquence 2. Le circuit d'antenne 232 comprend une piste conductrice filaire (ici illustrée en projection dans un plan). Le fil (ici en cuivre) du circuit d'antenne 232 suit ici globalement le contour d'un rectangle en projection. La piste conductrice est en pratique ménagée sur une paroi cylindrique de section circulaire. Pour les simulations réalisées, le circuit d'antenne 232 choisi présente une longueur de 90 mm, une largeur de 60 mm, un rayon du cylindre de 52 mm et un diamètre de fil de 1 mm. Le circuit d'antenne 232 présente ici une inductance de 258nH.

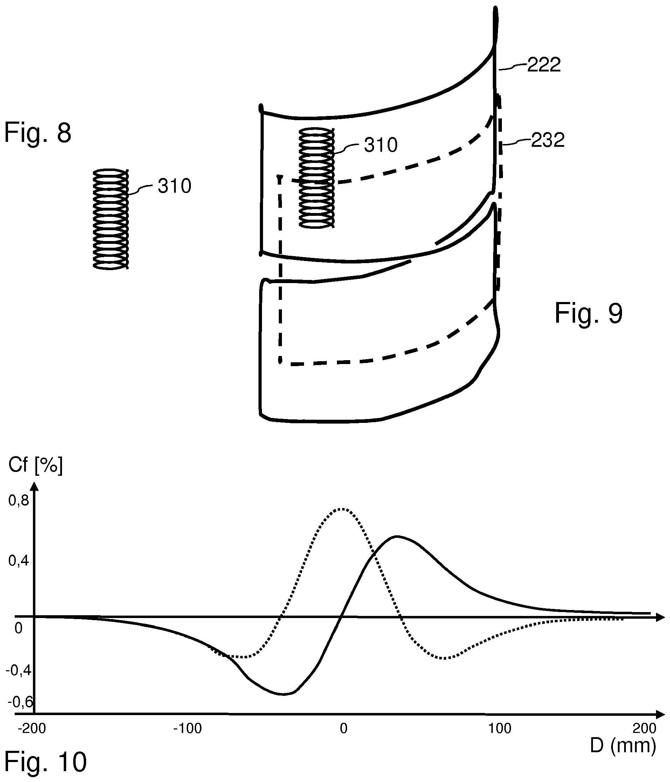

La figure 8 est une vue en perspective d'un exemple de circuit d'antenne 310 de l'étiquette radiofréquence 3. Le circuit d'antenne 310 présente un fil conducteur (en cuivre) enroulé en hélice. Pour les simulations réalisées, le circuit d'antenne 310 choisi présente un diamètre d'hélice de 10 mm, une longueur d'hélice de 30 mm, un nombre de 10 enroulements (en vue de réduire le temps de calcul, le nombre de spires a été volontairement réduit mais pourra être adapté dans la réalité, afin que l'inductance du circuit d'antenne 310 permette une fréquence de résonance proche de la fréquence de travail, par exemple 13,56 MHz (compte tenu de la capacité 301 embarquée dans la puce 30, augmentée de la capacité parasite du circuit d'antenne 310)), et un diamètre de fil de 0,2 mm. Le circuit d'antenne 222 présente ici une inductance de 418nH. Un tel circuit d'antenne 310 est allongé et de faible section, ce qui s'avère par exemple avantageux pour une intégration dans une corde, comme détaillé par la suite. Les simulations ont montré qu'un circuit d'antenne 310 relativement long ne nuisait pas à la précision de la localisation de la position relative spécifique.

La figure 9 est une vue en perspective des circuits d'antenne 222, 232 et 310 pour la position relative spécifique du lecteur 2 et du récepteur 3. Les cylindres portant les circuits d'antenne 222 et 232 ont un même axe que l'hélice du circuit d'antenne 310. Dans cette position relative spécifique, le circuit d'antenne 310 présente bien une mutuelle inductance sensiblement nulle par rapport au circuit d'antenne 232, et une mutuelle inductance non nulle par rapport au circuit d'antenne 222.

Les circuits d'antenne 222 et 232 sont centrés l'un par rapport à l'autre et alignés. Les circuits d'antenne 222 et 232 présentent bien ici des mutuelles inductances géométriquement quasiment nulles.

D'autres configurations des circuits d'antenne 222, 232 et 310 peuvent bien entendu être envisagées.

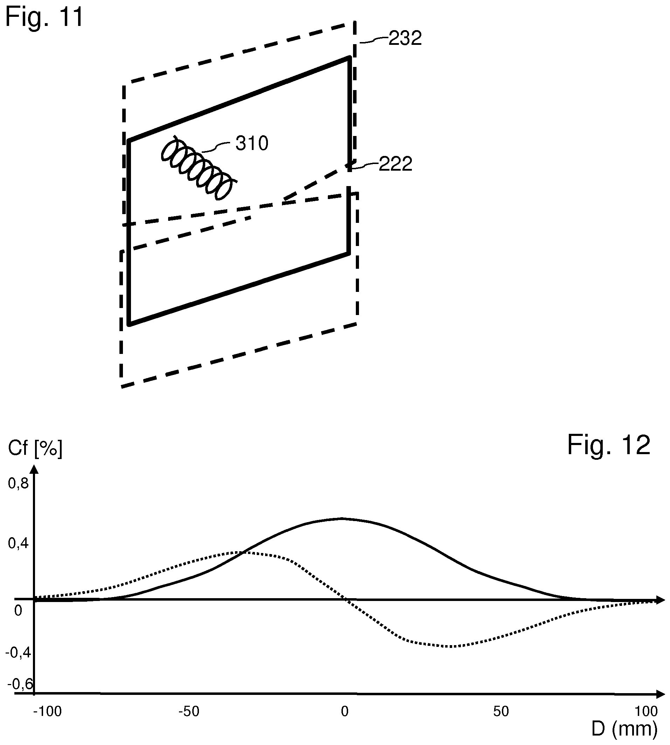

La figure 11 est une vue en perspective de circuits d'antenne et d'un bobinage d'antenne d'une variante, illustrant un autre exemple de circuit d'antenne d'émission/réception 222 du lecteur radiofréquence 2, et un autre exemple de circuit d'antenne de réception 232 du lecteur radiofréquence 2. L'orientation du circuit d'antenne 310 par rapport aux circuits d'antenne 222 et 232 est également différente.

Le circuit d'antenne 222 comprend une piste conductrice filaire ménagée sur un plan. La piste conductrice peut être en cuivre. Pour les simulations réalisées, le circuit d'antenne 222 choisi suit ici globalement le contour d'un rectangle. Pour les simulations réalisées, le circuit d'antenne 222 choisi présente une longueur de 90 mm, une largeur de 60 mm et un diamètre de fil de 1 mm. Le circuit d'antenne 222 présente ici une inductance de 267nH.

Le circuit d'antenne 232 comprend une piste conductrice filaire ménagée sur un plan. La piste conductrice peut être en cuivre, et ménagée sur une autre face d'un même support que le circuit d'antenne 222. Pour les simulations réalisées, le circuit d'antenne 232 choisi présente une longueur de 100 mm, une largeur de 100 mm, et un diamètre de fil de 1 mm. Le circuit d'antenne 232 présente ici une inductance de 515nH. La piste conductrice filaire du circuit d'antenne 232 comporte globalement deux boucles rectangulaires connectées en série et en sens opposés pour présenter une forme sensiblement en 8.

Le circuit d'antenne 310 présente la même géométrie et la même structure que dans l'exemple décrit en référence à la figure 8. Le circuit d'antenne 310 présente ainsi un fil conducteur enroulé en hélice, dont l'axe est perpendiculaire au plan des circuits d'antenne 222 et 232. L'axe de cet enroulement passe par le centre géométrique des circuits d'antenne 222 et 232.

La figure 12 un diagramme illustrant les couplages inductifs des antennes du lecteur par rapport à l'antenne de l'étiquette de la variante de la figure 11, en fonction de leurs positions relatives. On constate que lorsque le circuit d'antenne 310 est déplacé le long d'une droite parallèle au plan de la structure de circuits d'antenne 222 et 232, à une distance de 50mm dans le plan de symétrie de cette structure et passant devant le centre géométrique, pour la position spécifique relative, la mutuelle inductance entre le circuit d'antenne 222 et le circuit 310 est maximale, alors que la mutuelle inductance entre le circuit d'antenne 232 et le circuit d'antenne 310 est nulle.

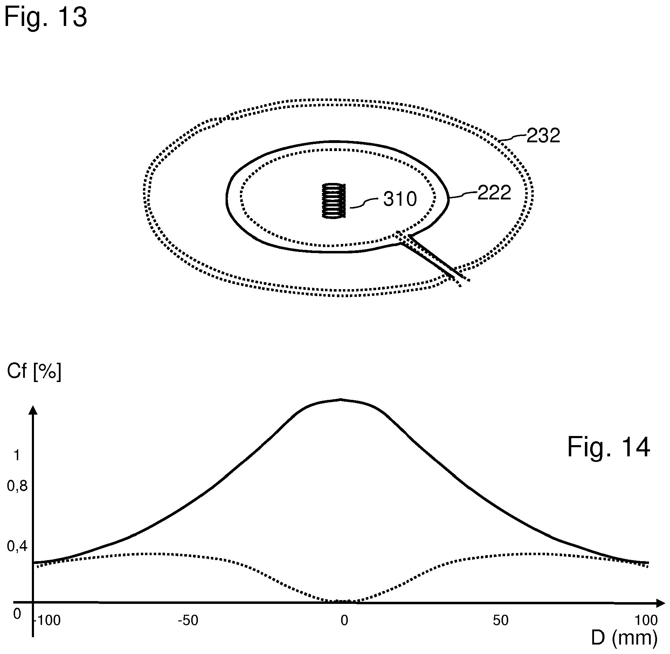

La figure 13 est une vue en perspective de circuits d'antenne et d'un bobinage d'antenne d'une variante illustrant un autre exemple de circuit d'antenne d'émission/réception 222 du lecteur radiofréquence 2, et un autre exemple de circuit d'antenne de réception 232 du lecteur radiofréquence 2. L'orientation du circuit d'antenne 310 par rapport aux circuits d'antenne 222 et 232 est également différente.

Le circuit d'antenne 222 comprend une piste conductrice filaire ménagée sur un plan. La piste conductrice peut être en cuivre. Pour les simulations réalisées, le circuit d'antenne 222 choisi suit ici globalement le contour d'un cercle externe, avec deux enroulements, joignant le contour d'un cercle, avec deux extensions pour les connexions. Ce cercle présente un diamètre de 115mm et un diamètre de fil de 1 mm. L'inductance est ici de 392 nH.

Le circuit d'antenne 232 comprend une piste conductrice filaire ménagée sur un plan parallèle au circuit d'antenne 222. La piste conductrice peut être en cuivre, et ménagée sur une autre face d'un même support que le circuit d'antenne 222. Pour les simulations réalisées, le circuit d'antenne 232 choisi suit ici globalement le contour d'un cercle externe, avec deux enroulements, joignant le contour d'un cercle interne, avec un enroulement. Pour les simulations réalisées, le diamètre du cercle interne est de 100mm, le diamètre du cercle externe est de 200mm, et le diamètre de fil est de 1,6 mm. L'inductance est ici de 2329 nH. Les cercles des circuits d'antenne 232 et 222 sont concentriques.

La figure 14 est un diagramme illustrant les couplages inductifs des antennes du lecteur par rapport à l'antenne de l'étiquette de la variante de la figure 13, en fonction de leurs positions relatives. On constate que lorsque le circuit d'antenne 310 est déplacé le long de l'axe perpendiculaire au plan des circuits d'antenne 222 et 232 et passant par leur centre géométrique, pour la position spécifique relative (circuit d'antenne 310 à une distance nulle dudit plan), la mutuelle inductance entre le circuit d'antenne 222 et le circuit d'antenne 310 est maximale, alors que la mutuelle inductance entre le circuit d'antenne 232 et le circuit d'antenne 310 est nulle.

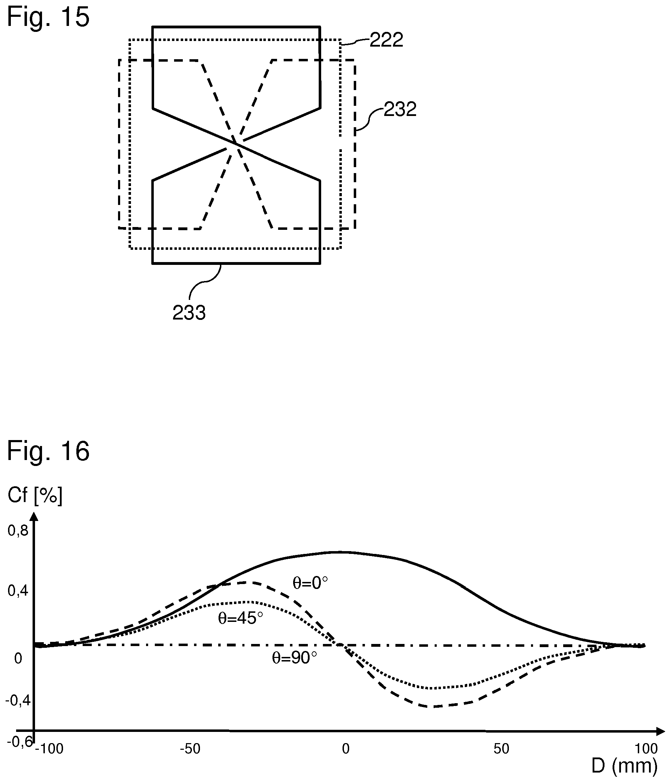

La figure 15 est une vue en projection de circuits d'antenne d'une variante. Dans cette variante, le lecteur 2 comporte deux circuits d'antenne de réception 232 et 233. Ces circuits d'antennes présentent sensiblement la géométrie du circuit d'antenne 232 de la figure 11. Les circuits d'antennes 222, 232 et 233 sont dans des plans parallèles, typiquement séparées par une couche de diélectrique. Les circuits d'antenne 232 et 233 sont pivotés à 90° dans l'exemple.

Le circuit d'antenne 310 présente la même géométrie et la même structure que dans l'exemple décrit en référence à la figure 8. Le circuit d'antenne 310 présente ainsi un fil conducteur enroulé en hélice, dont l'axe est perpendiculaire au plan des circuits d'antenne 222, 232 et 233 et passant par leur centre géométrique. Dans la position spécifique relative, le circuit d'antenne 310 a son axe qui passe par le centre géométrique des circuits d'antenne 222, 232, et 233. Si le circuit d'antenne 310 est déplacé dans un plan incluant la position spécifique relative, celle-ci sera identifiée lorsque le circuit d'antenne 310 l'atteint.

La figure 16 illustre un diagramme du couplage inductif d'un des circuits d'antenne de réception du lecteur par rapport à la position spécifique relative, dans le cas où le récepteur 3 est déplacé sur une trajectoire rectiligne dans un plan parallèle au plan de la structure des circuits d'antenne 222, 232 et 233 et passant par le point de position spécifique. Le couplage inductif entre un des circuits d'antenne de réception est tracé en fonction de l'angle d'incidence 0 de la trajectoire par rapport à la droite du plan en intersection avec le plan de symétrie du circuit d'antenne de réception. Dans un souci de simplification, seulement un diagramme de couplage inductif du circuit d'antenne d'émission/réception est illustré, ce couplage étant peu impacté par la valeur de l'angle $\theta$. On constate que la mutuelle inductance entre le circuit d'antenne 310 et le circuit d'antenne 222 reste maximale pour la position spécifique relative, quel que soit cet angle d'incidence. On constate également que la mutuelle inductance entre les circuits d'antenne 232 et 233 et le circuit d'antenne 310 est nulle pour la position spécifique relative, quel que soit cet angle d'incidence. On constate également que lorsque l'angle d'incidence 0 prend une valeur proche de 90° et qu'alors le diagramme de couplage inductif entre le circuit d'antenne 310 et le circuit d'antenne de réception à partir duquel est défini l'angle d'incidence, ne permet plus une discrimination de la position spécifique relative, le second circuit d'antenne de réception permet alors cette discrimination (l'angle d'incidence défini par rapport à ce second circuit est $\theta+\pi/2$).

Pour la géométrie des circuits d'antenne 222,232 et 310 décrite en référence à la figure 9, la figure 10 est un diagramme illustrant le couplage inductif des circuits d'antenne 222 et 232 avec le circuit d'antenne 310 durant un coulissement du récepteur 3 par rapport au lecteur 2, avec passage par la position spécifique relative illustrée en perspective à la figure 9. L'abscisse correspond à la distance par rapport à cette position spécifique relative durant le coulissement.

Le couplage entre le circuit d'antenne 222 et le circuit d'antenne 310 (illustré en pointillés) présente trois extrema (aux positions -65, 0 et +65mm) et deux minima (aux positions -40, et plus 40 mm). Potentiellement, la communication du lecteur 2 vers le récepteur 3 et l'alimentation du récepteur 3 par le lecteur 2 peuvent être réalisés en trois emplacements différents de cette course. La valeur maximum de la mutuelle inductance atteint ici 3,5nH (Cf=0,76%).

Le couplage entre le circuit d'antenne 233 et le circuit d'antenne 310 (illustré en trait plein) présente deux extrema (aux positions -40 et plus 40 mm) et un minima pour une position médiane entre ces deux extrema (Cf=-0,55% et +0,55%). Le couplage inductif entre le circuit d'antenne 233 et le circuit d'antenne 310 passe d'une valeur de -0,1 % à +0,1% sur une distance de 10 mm contenant la position relative spécifique. Cette zone de couplage inductif minimal étant particulièrement courte, la position relative spécifique entre le lecteur 2 et le récepteur 3 peut être identifiée de façon très précise.

De façon générale, le circuit de traitement 24 pourra conditionner l'identification d'un minimum de la mutuelle inductance entre le circuit d'antenne 232 et le circuit d'antenne 310 à l'exigence suivante : la mutuelle inductance entre le circuit d'antenne 232 et le circuit d'antenne 310 doit préalablement dépasser un seuil. On peut ainsi déterminer que le minimum de mutuelle inductance détecté correspond bien à la position relative spécifique.

Parmi les applications envisagées, on peut par exemple prévoir un lecteur 2 mobile et un récepteur 3 fixe, ou un lecteur 2 fixe et un récepteur 3 mobile. Celui des deux objets qui est mobile peut par exemple être guidé le long d'une trajectoire passant dans la position relative spécifique entre le lecteur 2 et le récepteur 3.

Dans l'application illustrée à la figure 4, le récepteur 3 est intégré dans une corde 4. Le récepteur 3 est par exemple positionné au niveau de la fibre neutre de la corde 4. La corde 4 est ici guidée pour défiler devant le lecteur 2 fixe. Ainsi, durant une course de défilement de la corde 4, le récepteur 3 va passer par la position spécifique relative illustrée par la croix 9 (la croix 9 identifie un lieu fixe par rapport au lecteur 2). L'instant du passage du récepteur 3 par la croix va pouvoir ainsi être identifié extrêmement précisément.

En positionnant le récepteur 3 au niveau de la fibre neutre de la corde 4, avec la géométrie du circuit d'antenne 310 détaillée en référence à la figure 7, la mutuelle inductance entre ce circuit d'antenne 310 et le circuit d'antenne 232 n'est pas altérée par une rotation de la corde 4 autour de son axe. En effet, sa mutuelle inductance respectivement avec le circuit d'antenne 222, le circuit d'antenne 232 est invariante en fonction d'une rotation autour de son axe.

Selon une application possible, on peut munir la corde 4 de plusieurs récepteurs 3 présentant des positions connues le long de cette corde 4, au moment de la fabrication de cette corde 4. Les récepteurs 3 sont par exemple disposés à des incréments de distance identiques le long de cette corde 4. Si on fait défiler la corde 4 à une vitesse prédéterminée, on peut mesurer les intervalles temporels séparant la détection de deux récepteurs 3 successifs. On peut alors en déduire la distance effective (distance en abscisse curviligne le long de la corde 4) entre les récepteurs 3 successifs. Une mesure de la distance entre les récepteurs 3 successifs permet par exemple de déterminer l'allongement de la corde dû à son vieillissement ou dû à une amorce de rupture. On peut ainsi anticiper le besoin de remplacement d'une telle corde 4.

La corde 4 est par exemple une corde de halage d'un diamètre d'environ 75 mm, pouvant être utilisée dans l'industrie pétrolière off-shore.

Selon une autre application, on peut utiliser l'association d'un lecteur 2 et de récepteur 3 pour la détection de positions spécifiques d'un ascenseur par rapport à une cage d'ascenseur. On peut par exemple fixer des récepteurs 3 à des positions spécifiques d'intérêt (par exemple zone de début de freinage, position d'immobilisation de palier...) et fixer un lecteur 2 à l'ascenseur. En fixant le lecteur 2 de sorte que, durant la course de l'ascenseur, ce lecteur 2 passe par ces positions relatives spécifiques par rapport aux différents récepteurs 3, chacune de ces positions relatives spécifiques va pouvoir être détectée avec précision.

Ainsi, dans ces différents exemples la trajectoire relative d'un récepteur 3 par rapport à un lecteur 2 est prédéfinie par guidage, de sorte que durant une course selon cette trajectoire, le récepteur 3 et le lecteur 2 sont transitoirement dans leur position relative spécifique, donnant lieu à détection.

On peut également prévoir que la trajectoire relative entre le récepteur 3 et le lecteur 2 ne soit pas prédéfinie. Le système de détection 1 a alors pour fonction d'identifier lorsque le récepteur 3 et le lecteur 2 ont atteint leur position relative spécifique, même si la trajectoire relative est bi-dimensionnelle ou tridimensionnelle, et non prédéfinie par un guidage relatif.

La figure 3 illustre de façon schématique un exemple de circuit de traitement 24 destiné à favoriser la précision de la détermination de la position spécifique relative.

Le circuit de traitement 24 comprend typiquement un amplificateur bas bruit 242 connecté au circuit d'antenne 222. L'amplificateur bas bruit 242 est connecté à un circuit de traitement du signal 243 configuré pour extraire les composantes du signal du circuit d'antenne 222, relatives à la modulation de charge réalisée par le récepteur 3 pour la communication retour. Par exemple, dans le cas d'un protocole de communication utilisant une sous porteuse pour la communication retour, ce signal de trame retour se matérialise par un signal de sous porteuse retour modulé par le signal en bande de base, après des modulations de la porteuse (la fréquence centrale du champ électromagnétique généré par le circuit d'antenne 222, typiquement à 13,56 MHz). L'utilisation d'une sous porteuse pour la communication retour est préférable, en vue de réaliser une détection fiable et rapide de la position relative spécifique.

Le circuit de traitement 24 comprend typiquement un amplificateur bas bruit 246, connecté au circuit d'antenne 232. L'amplificateur bas bruit 246 est connecté à un circuit de traitement de signal 245, configuré pour extraire les composantes du signal du circuit d'antenne 232, relatives à la modulation de charge réalisée par le récepteur 3, durant sa communication retour. La détermination d'un minimum de couplage inductif du circuit d'antenne 232 avec le circuit d'antenne 310 du récepteur 3, se traduit par un minimum des composantes du signal relatives à la modulation de charge..

Par croisement des informations fournies par les circuits de traitement de signal 243 et 245, le circuit de traitement 24 peut identifier la position relative spécifique selon la logique détaillée précédemment.

Avantageusement, le circuit de traitement 24 comporte un circuit 244 de calcul de la corrélation entre le signal de retour sur le circuit d'antenne 222 et le signal sur le circuit d'antenne 232, afin d'augmenter la précision de mesure de la composante de sous-porteuse, en ajoutant notamment une notion de phase.

La trame de l'information binaire transmise par le récepteur 3 au lecteur 2 est construite par modulation de second niveau sur cette sous-porteuse (par exemple en ASK pour Amplitude Shift Keying ou BPSK pour Binary Phase Shift Keying an langue anglaise) moyennant des délimiteurs de trame (SOF pour Start Of Frame et EOF pour End Of Frame en langue anglaise). Ce signal de sous-porteuse permet de distinguer, au niveau du lecteur 2, la partie (de faible niveau) du spectre du signal radiofréquence de communication retour provenant du récepteur 3 par rapport au signal de puissance produit par le lecteur 2 à la fréquence porteuse en émission.

Avantageusement, le lecteur 2 et le récepteur 3 ont des fonctions d'identification, le récepteur 3 pouvant communiquer un numéro d'identification unique, par exemple selon la technologie d'identification RFID. Si plusieurs récepteurs 3 sont susceptibles de passer par une position relative spécifique et que lecteur 2, ces récepteurs 3 peuvent ainsi être discriminés.

Le lecteur 2 et le récepteur 3 pourront par exemple ce conformer aux normes ISO14443, ISO18000-3 ou ISO15693 pour une fréquence de communication à 13,56 MHz, ou ISO18000-2 pour une fréquence de communication à un niveau inférieur à 135kHz. Une fréquence de communication HF (entre 3 et 30MHz) sera favorisée pour améliorer la rapidité de détection tout en restant dans le domaine des circuits inductifs couplés. La modulation de charge par le récepteur s'effectue à une cadence intermédiaire, dite fréquence de sous-porteuse (un sous multiple de la fréquence porteuse de 13,56MHz).

La communication entre l'antenne 22 et l'étiquette 3 peut être réalisée selon des protocoles connus en soi de l'homme du métier.

De façon connue en soi, les informations d'une mémoire d'un récepteur 3 de type RFID peuvent être mis à jour par le lecteur 2. Avantageusement, le récepteur 3 dispose d'une mémoire dans laquelle le lecteur 2 peut écrire ou changer des informations, juste après la détection de la position relative spécifique.

En fonction des vitesses de déplacement relatives entre un lecteur 2 et un récepteur 3, on sélectionnera un protocole de communication présentant un débit plus ou moins rapide. Par exemple, le protocole ISO15693 propose une commande appelée 'Inventory' qui peut être enchaînée à un rythme de 130 Hz. Ceci permet d'effectuer un échantillonnage pour la détection de la position relative spécifique avec une résolution d'au moins 0,76 cm, dans le cas d'un récepteur 3 se déplaçant à 1 m/s. Le temps total entre le début d'une commande de type 'Inventory' et la fin de la réponse est de 5,8 ms environ. Pour permettre de diminuer l'échantillonnage spatial jusqu'à environ 5 mm pour une vitesse de déplacement de 1 m/s, le protocole ISO14443 sera mieux adapté.

Dans les exemples illustrés précédemment, le lecteur 2 comporte un unique circuit d'antenne de réception 232. On peut également envisager de munir le lecteur 2 de plusieurs circuits d'antenne de réception avec différentes orientations, afin de pouvoir détecter différentes positions relatives spécifiques par rapport à un récepteur 3.

**Revendications**

1. Système (1) de détection d'une position relative spécifique entre un lecteur radiofréquence (2) et un récepteur radiofréquence (3), **caractérisé en ce qu'**il comprend :

   - un récepteur radiofréquence (3) de type sans contact inductif comprenant un bobinage d'antenne (310) et un circuit (30) configuré pour moduler sélectivement la charge électrique aux bornes dudit bobinage d'antenne ;
   - un lecteur radiofréquence (2) sans contact de type inductif comprenant :

- un circuit d'antenne d'émission/réception (222) présentant une mutuelle inductance non nulle avec ledit bobinage d'antenne (310) du récepteur radiofréquence pour ladite position relative spécifique ;
- un circuit de communication, comprenant une chaîne d'émission radiofréquence et une chaîne de réception radiofréquence connectées au circuit d'antenne d'émission/réception (222) ;
- un circuit d'antenne de réception (232) présentant une mutuelle inductance avec ledit bobinage d'antenne (310) du récepteur radiofréquence présentant un minimum pour ladite position relative spécifique ;
- un circuit de traitement (24) connecté audit circuit d'antenne d'émission/réception (222), et configuré pour :

- identifier la présence d'un récepteur en détectant une mutuelle inductance non nulle entre le circuit d'antenne d'émission/réception (222) et un bobinage d'antenne (310) ;
- détecter un minimum de mutuelle inductance entre le circuit d'antenne de réception (232) et un bobinage d'antenne (310) ;
- déterminer que le lecteur (2) et un récepteur radiofréquence (3) sont dans ladite position relative spécifique lors d'une identification de la présence d'un récepteur simultanément à la détection d'un minimum de mutuelle inductance entre le circuit d'antenne de réception (232) et un bobinage d'antenne.

2. Système (1) de détection selon la revendication 1, dans lequel ledit circuit d'antenne d'émission/réception (222) présente une mutuelle inductance non nulle avec ledit bobinage d'antenne (310) lorsque le lecteur (2) et le récepteur (3) présentent une distance inférieure à 20mm de ladite position relative spécifique.

3. Système (1) de détection selon la revendication 1 ou 2, dans lequel ledit circuit de traitement (24) est configuré pour déterminer que le lecteur (2) et le récepteur radiofréquence (3) sont dans ladite position relative spécifique seulement après avoir identifié auparavant la détection d'une mutuelle inductance entre le circuit d'antenne de réception (232) et un bobinage d'antenne supérieur à un seuil.

4. Système (1) de détection selon l'une quelconque des revendications précédentes, dans lequel le facteur de couplage inductif entre le circuit d'antenne de réception (232) et le circuit d'antenne d'émission/réception (222) est inférieur à 1%.

5. Système (1) de détection selon l'une quelconque des revendications précédentes, dans lequel ledit récepteur (3) est une étiquette RFID.

6. Système (1) de détection selon l'une quelconque des revendications précédentes, dans lequel ladite chaîne d'émission radiofréquence est configurée pour communiquer par l'intermédiaire du circuit d'antenne d'émission/réception à une première fréquence, ledit circuit (30) du récepteur étant configuré pour moduler sélectivement la charge électrique aux bornes dudit bobinage d'antenne (310) à une fréquence différente de ladite première fréquence.

7. Système (1) de détection selon la revendication 6, dans lequel ledit circuit (30) du récepteur est configuré pour moduler sélectivement la charge électrique aux bornes dudit bobinage d'antenne (310) à une sous-porteuse de ladite première fréquence.

8. Système (1) de détection selon l'une quelconque des revendications précédentes, dans lequel ledit circuit d'émission/réception (222) présente une longueur au moins deux fois supérieure à la longueur dudit bobinage d'antenne (310).

9. Système (1) de détection selon l'une quelconque des revendications précédentes, dans lequel ledit circuit de traitement (24) est configuré pour calculer une corrélation entre un signal reçu sur le circuit d'antenne d'émission/réception (222) et un signal reçu sur le circuit d'antenne de réception (232).

10. Système (1) de détection selon l'une quelconque des revendications précédentes, comprenant en outre un dispositif de guidage du mouvement relatif entre le lecteur radiofréquence (2) et le récepteur radiofréquence (3) selon une trajectoire prédéfinie, ladite trajectoire prédéfinie passant par ladite position relative spécifique.

11. Système (1) de détection selon la revendication 10, comprenant en outre un composant allongé (4) guidé selon ladite trajectoire prédéfinie par rapport audit lecteur radiofréquence (2), le composant allongé comportant plusieurs desdits récepteurs radiofréquence fixés en différents emplacements le long dudit composant allongé (4).

12. Procédé de détection d'une position relative spécifique entre un lecteur radiofréquence (2) et une étiquette radiofréquence (3), avec :

- ledit récepteur radiofréquence (3) étant de type sans contact inductif comprenant un bobinage d'antenne (310) ;

- ledit lecteur étant un lecteur radiofréquence sans contact de type inductif, comprenant :

- un circuit d'antenne d'émission/réception (222), présentant une mutuelle inductance non nulle avec ledit bobinage d'antenne (310) du récepteur radiofréquence pour ladite position relative spécifique ;
- un circuit d'antenne de réception (232) présentant une mutuelle inductance avec ledit bobinage d'antenne (310) du récepteur radiofréquence présentant un minimum pour ladite position relative spécifique ;

Le procédé comprenant les étapes de :

- émission d'un signal radiofréquence par l'intermédiaire du circuit d'antenne d'émission/réception (222) du lecteur radiofréquence ;
- moduler une charge électrique aux bornes dudit bobinage d'antenne du récepteur en réponse à ladite émission du signal radiofréquence ;
- identifier la présence du récepteur (3) en détectant une mutuelle inductance non nulle entre le circuit d'antenne d'émission/réception (222) et le bobinage d'antenne (310) ;
- déterminer que le lecteur (2) et le récepteur radiofréquence (3) sont dans ladite position relative spécifique lors de l'identification de la présence du récepteur simultanément à une détection d'un minimum de mutuelle inductance entre le circuit d'antenne de réception (232) et le bobinage d'antenne (310).

**Patentansprüche**

1. System (1) zur Erfassung einer spezifischen relativen Position zwischen einem Hochfrequenzleser (2) und einem Hochfrequenzempfänger (3), **dadurch gekennzeichnet, dass** es umfasst:

- einen Hochfrequenzempfänger (3) vom induktiven kontaktlosen Typ, der eine Antennenwicklung (310) und eine Schaltung (30), die dafür ausgelegt ist, selektiv die elektrische Last an den Klemmen der Antennenwicklung zu modulieren, umfasst;
- einen kontaktlosen Hochfrequenzleser (2) vom induktiven Typ, welcher umfasst:

- eine Sende-/Empfangsantennenschaltung (222), die eine von null verschiedene Gegeninduktivität mit der Antennenwicklung (310) des Hochfrequenzempfängers für die spezifische relative Position aufweist;
- eine Kommunikationsschaltung, die eine Hochfrequenzsendekette und eine Hochfrequenzempfangskette umfasst, die mit der Sende-/Empfangsantennenschaltung (222) verbunden sind;
- eine Empfangsantennenschaltung (232), die eine Gegeninduktivität mit der Antennenwicklung (310) des Hochfrequenzempfängers aufweist, die für die spezifische relative Position ein Minimum aufweist;
- eine Verarbeitungsschaltung (24), die mit der Sende-/Empfangsantennenschaltung (222) verbunden ist und ausgelegt ist zum:

- Identifizieren des Vorhandenseins eines Empfängers durch Erfassen einer von null verschiedenen Gegeninduktivität zwischen der Sende-/Empfangsantennenschaltung (222) und einer Antennenwicklung (310);
- Erfassen eines Minimums der Gegeninduktivität zwischen der Empfangsantennenschaltung (232) und einer Antennenwicklung (310);
- Bestimmen, bei einer Identifizierung des Vorhandenseins eines Empfängers gleichzeitig mit der Erfassung eines Minimums der Gegeninduktivität zwischen der Empfangsantennenschaltung (232) und einer Antennenwicklung, dass sich der Leser (2) und ein Hochfrequenzempfänger (3) in der spezifischen relativen Position befinden.

2. System (1) zur Erfassung nach Anspruch 1, wobei die Sende-/Empfangsantennenschaltung (222) eine von null verschiedene Gegeninduktivität mit der Antennenwicklung (310) aufweist, wenn der Leser (2) und der Empfänger (3) eine Entfernung von weniger als 20 mm von der spezifischen relativen Position aufweisen.

3. System (1) zur Erfassung nach Anspruch 1 oder 2, wobei die Verarbeitungsschaltung (24) dafür ausgelegt ist, nur zu bestimmen, dass sich der Leser (2) und der Hochfrequenzempfänger (3) in der spezifischen relativen Position befinden, nachdem sie zuvor die Erfassung einer Gegeninduktivität zwischen der Empfangsantennenschaltung (232) und einer Antennenwicklung identifiziert hat, die größer als ein Schwellenwert ist.

4. System (1) zur Erfassung nach einem der vorhergehenden Ansprüche, wobei der induktive Kopplungsfaktor zwischen der Empfangsantennenschaltung (232) und der Sende-/Empfangsantennenschaltung (222) kleiner als 1 % ist.

5. System (1) zur Erfassung nach einem der vorhergehenden Ansprüche, wobei der Empfänger (3) ein RFID-Etikett ist.

6. System (1) zur Erfassung nach einem der vorhergehenden Ansprüche, wobei die Hochfrequenzsendekette dafür ausgelegt ist, über die Sende-/Empfangsantennenschaltung mit einer ersten Frequenz zu kommunizieren, wobei die Schaltung (30) des Empfängers dafür ausgelegt ist, selektiv die elektrische Last an den Klemmen der Antennenwicklung (310) mit einer Frequenz zu modulieren, die von der ersten Frequenz verschieden ist.

7. System (1) zur Erfassung nach Anspruch 6, wobei die Schaltung (30) des Empfängers dafür ausgelegt ist, selektiv die elektrische Last an den Klemmen der Antennenwicklung (310) auf einen Unterträger der ersten Frequenz zu modulieren.

8. System (1) zur Erfassung nach einem der vorhergehenden Ansprüche, wobei die Sende-/Empfangsantennenschaltung (222) eine Länge aufweist, die mindestens doppelt so groß wie die Länge der Antennenwicklung (310) ist.

9. System (1) zur Erfassung nach einem der vorhergehenden Ansprüche, wobei die Verarbeitungsschaltung (24) dafür ausgelegt ist, eine Korrelation zwischen einem auf der Sende-/Empfangsantennenschaltung (222) empfangenen Signal und einem auf der Empfangsantennenschaltung (232) empfangenen Signal zu berechnen.

10. System (1) zur Erfassung nach einem der vorhergehenden Ansprüche, welches außerdem eine Vorrichtung zur Führung der relativen Bewegung zwischen dem Hochfrequenzleser (2) und dem Hochfrequenzempfänger (3) entlang einer vordefinierten Bahn umfasst, wobei die vordefinierte Bahn durch die spezifische relative Position verläuft.

11. System (1) zur Erfassung nach Anspruch 10, welches außerdem eine lang gestreckte Komponente (4) umfasst, die entlang der vordefinierten Bahn in Bezug auf den Hochfrequenzleser (2) geführt wird, wobei die lang gestreckte Komponente mehrere der Hochfrequenzempfänger aufweist, die an verschiedenen Stellen entlang der lang gestreckten Komponente (4) befestigt sind.

12. Verfahren zur Erfassung einer spezifischen relativen Position zwischen einem Hochfrequenzleser (2) und einem Hochfrequenzetikett (3), wobei:

   - der Hochfrequenzempfänger (3) vom induktiven kontaktlosen Typ ist und eine Antennenwicklung (310) umfasst;
   - der Leser ein kontaktloser Hochfrequenzleser vom induktiven Typ ist, der umfasst:

      - eine Sende-/Empfangsantennenschaltung (222), die eine von null verschiedene Gegeninduktivität mit der Antennenwicklung (310) des Hochfrequenzempfängers für die spezifische relative Position aufweist;
      - eine Empfangsantennenschaltung (232), die eine Gegeninduktivität mit der Antennenwicklung (310) des Hochfrequenzempfängers aufweist, die für die spezifische relative Position ein Minimum aufweist;

wobei das Verfahren die Schritte umfasst:

   - Senden eines Hochfrequenzsignals über die Sende-/Empfangsantennenschaltung (222) des Hochfrequenzlesers;
   - Modulieren einer elektrischen Last an den Klemmen der Antennenwicklung des Empfängers in Reaktion auf das Senden des Hochfrequenzsignals;
   - Identifizieren des Vorhandenseins des Empfängers (3) durch Erfassen einer von null verschiedenen Gegeninduktivität zwischen der Sende-/Empfangsantennenschaltung (222) und der Antennenwicklung (310);
   - Bestimmen, bei der Identifizierung des Vorhandenseins des Empfängers gleichzeitig mit einer Erfassung eines Minimums der Gegeninduktivität zwischen der Empfangsantennenschaltung (232) und der Antennenwicklung (310), dass sich der Leser (2) und der Hochfrequenzempfänger (3) in der spezifischen relativen Position befinden.

**Claims**

1. System (1) for detecting a specific relative position between a radiofrequency reader (2) and a radiofrequency receiver (3), **characterized in that** it comprises:

   - an inductive contactless radiofrequency receiver (3) comprising an antenna winding (310) and a circuit (30) configured so as to selectively modulate the electrical load at the terminals of said antenna winding;
   - an inductive contactless radiofrequency reader (2) comprising:

      - a transceiver antenna circuit (222) having nonzero mutual inductance with said antenna winding (310) of the radiofrequency receiver for said specific relative position;
- a communication circuit, comprising a radiofrequency emission chain and a radiofrequency reception chain that are connected to the transceiver antenna circuit (222);
- a receiver antenna circuit (232) having mutual inductance with said antenna winding (310) of the radiofrequency receiver that exhibits a minimum for said specific relative position;
- a processing circuit (24) connected to said transceiver antenna circuit (222) and configured so as to:

  - identify the presence of a receiver by detecting nonzero mutual inductance between the transceiver antenna circuit (222) and an antenna winding (310);
  - detect a mutual inductance minimum between the receiver antenna circuit (232) and an antenna winding (310);
  - determine that the reader (2) and a radiofrequency receiver (3) are in said specific relative position during identification of the presence of a receiver at the same time as the detection of a mutual inductance minimum between the receiver antenna circuit (232) and an antenna winding.

2. Detection system (1) according to Claim 1, wherein said transceiver antenna circuit (222) has nonzero mutual inductance with said antenna winding (310) when the reader (2) and the receiver (3) are at a distance of less than 20 mm from said specific relative position.

3. Detection system (1) according to Claim 1 or 2, wherein said processing circuit (24) is configured so as to determine that the reader (2) and the radiofrequency receiver (3) are in said specific relative position only after having identified beforehand the detection of mutual inductance between the receiver antenna circuit (232) and an antenna winding that is greater than a threshold.

4. Detection system (1) according to any one of the preceding claims, wherein the inductive coupling factor between the receiver antenna circuit (232) and the transceiver antenna circuit (222) is less than 1%.

5. Detection system (1) according to any one of the preceding claims, wherein said receiver (3) is an RFID tag.

6. Detection system (1) according to any one of the preceding claims, wherein said radiofrequency emission chain is configured so as to communicate, by way of the transceiver antenna circuit, at a first frequency, said circuit (30) of the receiver being configured so as to selectively modulate the electrical load at the terminals of said antenna winding (310) at a frequency different from said first frequency.

7. Detection system (1) according to Claim 6, wherein said circuit (30) of the receiver is configured so as to selectively modulate the electrical load at the terminals of said antenna winding (310) at a subcarrier of said first frequency.

8. Detection system (1) according to any one of the preceding claims, wherein said transceiver circuit (222) has a length at least twice as long as the length of said antenna winding (310).

9. Detection system (1) according to any one of the preceding claims, wherein said processing circuit (24) is configured so as to calculate a correlation between a signal received on the transceiver antenna circuit (222) and a signal received on the receiver antenna circuit (232).

10. Detection system (1) according to any one of the preceding claims, furthermore comprising a device for guiding the relative movement between the radiofrequency reader (2) and the radiofrequency receiver (3) along a predefined path, said predefined path passing through said specific relative position.

11. Detection system (1) according to Claim 10, furthermore comprising an elongated component (4) guided along said path predefined with respect to said radiofrequency reader (2), the elongated component including a plurality of said radiofrequency receivers fixed at various locations along said elongated component (4).

12. Method for detecting a specific relative position between a radiofrequency reader (2) and a radiofrequency tag (3), with:

  - said radiofrequency receiver (3) being of inductive contactless type and comprising an antenna winding (310);
  - said reader being an inductive contactless radiofrequency reader, comprising:

    - a transceiver antenna circuit (222) having nonzero mutual inductance with said antenna winding (310) of the radiofrequency receiver for said specific relative position;
    - a receiver antenna circuit (232) having mutual inductance with said antenna winding (310) of the radiofrequency receiver that exhibits a minimum for said specific relative position;

the method comprising the steps of:

- emitting a radiofrequency signal by way of the transceiver antenna circuit (222) of the radiofrequency reader;
- modulating an electrical load at the terminals of said antenna winding of the receiver in response to said emission of the radiofrequency signal;
- identifying the presence of the receiver (3) by detecting nonzero mutual inductance between the transceiver antenna circuit (222) and the antenna winding (310);
- determining that the reader (2) and the radiofrequency receiver (3) are in said specific relative position during the identification of the presence of the receiver at the same time as detection of a mutual inductance minimum between the receiver antenna circuit (232) and the antenna winding (310).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

222

232

233

Fig. 16

Cf [%]

0,8

0,4

0

-0,4

-0,6

θ=0°

θ=45°

θ=90°

-100          -50          0          50          100

D (mm)

## RÉFÉRENCES CITÉES DANS LA DESCRIPTION

**Documents brevets cités dans la description**

- FR 2891980
- US 20080278289 A
- EP 1043679 A
- WO 9921144 A
- JP 2003148653 B
- EP 2077518 A
- US 20070290846 A